# EUROPEAN PATENT APPLICATION

(11) **EP 2 562 746 A1**
(43) Date of publication of application: **27.02.2013**
(21) Application number: 12181788.6
(22) Date of filing: 24.08.2012
(51) Int. Cl.: G10L 15/25, G10L 15/32, G06K 9/00, G06K 9/62

(54) **Apparatus and method for recognizing voice by using lip image**

(30) Priority: 25.08.2011 KR 20110085305
(71) Applicant: Samsung Electronics Co., Ltd., Suwon-si, Gyeonggi-do, 443-742 (KR)
(72) Inventor: Jang, Jong-hyuk, Gyeonggi-do, (KR); Ryu, Hee-seob, Gyeonggi-do, (KR); Park, Kyung-mi, Gyeonggi-do (KR); Park, Seung-kwon, Gyeonggi-do, (KR); Bae, Jae-hyun, Gyeonggi-do (KR)
(74) Representative: Hewett, Jonathan Michael Richard

(57) **Abstract**

An apparatus and a method for recognizing a voice by using a lip image are provided. The apparatus includes: a voice recognizer which recognizes a voice of a user and outputs text information based on the recognized voice; a lip shape detector which detects a lip shape of the user; and a voice recognition result verifier which determines whether the text information output by the voice recognizer is correct, by using a result of the detection by the lip shape detector.

## Description

The present invention relates to recognizing a voice, and more particularly, to recognizing a voice by using a voice which is received through a microphone and a lip image which is captured through a photographing apparatus.

An input device, such as a mouse or a keyboard, is used to control an electronic device. With developments of technology, input devices considering convenience of users, such as a touch screen, a pointing device, a voice recognition apparatus, etc., have been developed in order to control electronic devices.

For example, a voice recognition apparatus recognizes a voice, which is made by a user without an additional motion, to control an electronic device and thus provides higher convenience than other types of apparatuses. Voice recognition has developed from word recognition into natural language recognition. Also, a voice recognition system has developed from a system in which a user presses a button or the like to designate a voice recognition section and then vocalizes into a system which receives all voices of a user and then recognizes and reacts to only meaningful sentences.

However, if a user command is input by using a voice recognition apparatus, the voice recognition apparatus is more likely to make an error compared to other types of apparatuses since persons have different oral structures and minutely differently pronounces the same word.

Accordingly, a method of accurately recognizing a voice made by a user is needed.

One or more exemplary embodiments of the present invention provide voice recognition apparatus and method for detecting a lip shape of a user when the user makes a voice and determining whether text information recognized by the apparatus is correct, by using the lip shape.

According to an aspect of an exemplary embodiment, there is provided a voice recognition apparatus including: a voice recognizer which recognizes a voice of a user and outputs text information based on the recognized voice; a lip shape detector which detects a lip shape of the user; and a voice recognition result verifier which determines whether the text information output by the voice recognizer is correct, by using a result of the detection result by the lip shape detector.

The voice recognizer may include: a microphone which receives the voice of the user and outputs a voice signal; a voice section detector which detects a voice section, corresponding to the voice of the user, from the voice signal output by the microphone; a phoneme separator which detects phonemes from the voice section, generates phoneme data based on the detected phonemes and outputs the phoneme data; and a voice recognition engine which converts the voice signal into the text information by using the phoneme data of the voice section.

The lip shape detector may include: a lip detector which detects a lip image of the user; a lip tracker which tracks variations of the lip image of the user; and a characteristic dot detector which detects characteristic dots according to the variations of the lip image.

The voice recognition result verifier may compare the phoneme data output by the phoneme separator with the characteristic dots to determine whether the text information output from the voice recognizer is correct.

The voice recognition result verifier may extract phoneme data affecting the lip shape from the phoneme data separated by the phoneme separator to check whether the phoneme data affecting the lip shape sequentially exists in the lip images.

The phoneme separator may generate the phoneme data by using phonetic signs of the text information.

The voice recognition engine may convert the voice made by the user into the text information by using a Hidden Markov Model (HMM) probability model.

The voice recognition apparatus may further include a display unit which displays a result of the determination of whether the text information is correct by the voice recognition result verifier.

According to an aspect of another exemplary embodiment, there is provided a voice recognition method including: recognizing a voice of a user and outputting text information based on the recognized voice; detecting a lip shape of a user; and determining whether the text information is correct based on a result of the detecting the lip shape of the user.

The recognizing the voice of the user and outputting the text information may include: receiving the voice through a microphone and outputting a voice signal by the microphone; detecting a voice section, corresponding to voice of the user, from the voice output by the microphone; detecting phonemes of the voice section and generating phoneme data and outputting the phoneme data based on the detected phoneme; and converting the phoneme data of the voice section into the text information and outputting the text information.

The detecting of the voice section may include: if the recognition of the voice starts, detecting a lip image of the user; tracking variations of the lip image of the user; and detecting characteristic dots according to the variations of the lip image.

The separated phoneme data may be compared with the characteristic dots to determine whether the text information is correct.

The determination of whether the text information is correct may include: extracting phoneme data affecting the lip shape from the generated phoneme data; and checking whether the phoneme data affecting the lip shape sequentially exists in the detected lip image, to determine whether the text information is correct.

The phoneme data may be generated and output by using phonetic signs of the text information.

The voice made by the user may be converted into the text information by using an HMM probability model.

The voice recognition method may further include displaying the result of the determining whether the text information is correct.

Additional aspects and advantages of the exemplary embodiments will be set forth in the detailed description, will be obvious from the detailed description, or may be learned by practicing the exemplary embodiments.

The above and/or other aspects will be more apparent by describing in detail exemplary embodiments, with reference to the accompanying drawings, in which:
FIG. 1 is a schematic block diagram of a voice recognition apparatus according to an exemplary embodiment;
FIG. 2 is a detailed block diagram of the voice recognition apparatus of FIG. 1;
FIGS. 3A through 3C are views illustrating lip images according to phoneme data, according to an exemplary embodiment;
FIG. 4 is a flowchart illustrating a voice recognition method according to an exemplary embodiment; and

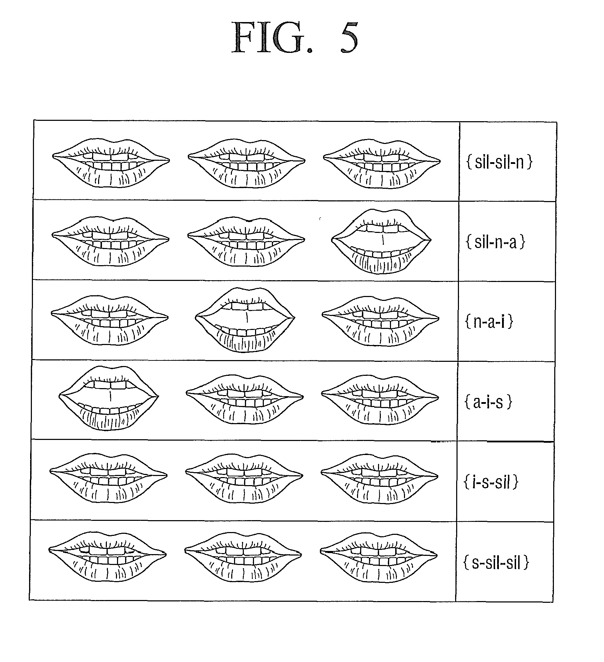

FIG. 5 is a view illustrating lip shape patterns of "nice" according to an exemplary embodiment.

Hereinafter, exemplary embodiments will be described in greater detail with reference to the accompanying drawings.

In the following description, same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

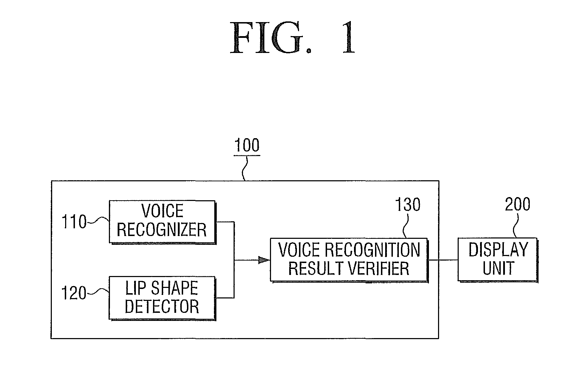

FIG. 1 is a schematic block diagram of a voice recognition apparatus 100 according to an exemplary embodiment. Referring to FIG. 1, the voice recognition apparatus 100 includes a voice recognizer 110, a lip shape detector 120, and a voice recognition result verifier 130. The voice recognizer 110, the lip shape detector 120, and the voice recognition result verifier 130 may be embodied as one or more processors or general purpose computer.

The voice recognizer 110 receives a voice signal of a voice of a user input through a microphone and detects a voice section of the voice signal. The voice recognizer 110 also converts the detected voice section into text information and outputs the text information. Here, the voice recognizer 110 may convert the voice signal of the user into the text information by using a Hidden Markov Model (HMM) probability model.

The voice recognizer 110 separates phonemes from the text information to generate phoneme data in order to compare the phonemes with a lip shape of the user and outputs the phoneme data to the voice recognition result verifier 130. Here, the voice recognizer 110 may extract and output only the phonemes of the phoneme data which determines the lip shape. For example, in the case of the Korean language, phonemes determining a lip shape are vowels. Therefore, the voice recognizer 110 may extract only vowel data from the text information and output the vowel data to the voice recognition result verifier 130. Also, in the case of a language in which writing signs are different from phonetic signs, like the English language, phoneme data may be generated by using phonetic signs.

If a voice recognition start signal is received from the voice recognizer 110, the lip shape detector 120 detects a lip image of the user from a face of the user which is being captured through a photographing apparatus. The lip shape detector 120 tracks variations of the lip image of the user in the voice section made by the user. Here, the lip shape detector 120 may extract characteristic dots of the lip image according to the variations of the lip image. The characteristic dots refer to a plurality of dots which are positioned around lips of the user to distinguish the lip shape of the user.

The lip shape detector 120 outputs the characteristic dots of the lip image to the voice recognition result verifier 130.

The voice recognition result verifier 130 determines whether the text information output by the voice recognizer 110 as a voice recognition result is correct, by using the input phoneme data output by the voice recognizer 110 and the characteristic dots of the lip image output by the lip shape detector 120. In more detail, the voice recognition result verifier 130 compares the phoneme data with the characteristic dots of the lip image in temporal order to determine whether variations of the phoneme data correspond to variations of the characteristic dots of the lip image.

If the variations of the input phoneme data correspond to the variations of the characteristic dots of the lip image, the voice recognition result verifier 130 outputs the text information, which is output from the voice recognizer 110, to a display unit 200. If the variations of the phoneme data do not correspond to the variations of the characteristic dots of the lip image, the voice recognition result verifier 130 outputs a menu window, which displays that an error has occurred in a voice recognition and requests a voice re-recognition, to the display unit 200.

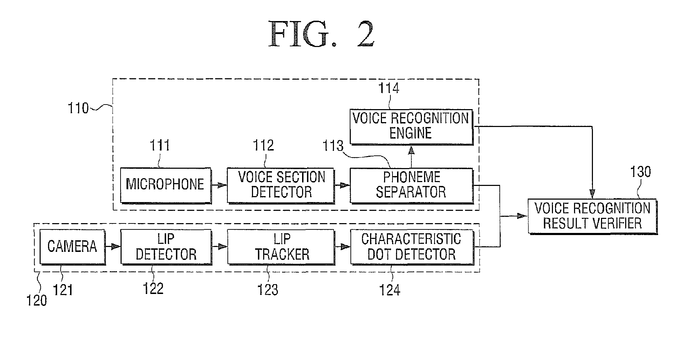

The voice recognition apparatus 100 will now be described in more detail with reference to FIG. 2.

FIG. 2 is a detailed block diagram of the voice recognition apparatus 100 of FIG. 1.

Referring to FIG. 2, the voice recognition apparatus 100 includes a microphone 111, a voice section detector 112, a phoneme separator 113, a voice recognition engine 114, a camera 121, a lip detector 122, a lip tracker 123, a characteristic dot detector 124, and the voice recognition result verifier 130. Here, the microphone 111, the voice section detector 112, the phoneme separator 113, and the voice recognition engine 114 constitute the voice recognizer 110. Also, the camera 121, the lip detector 122, the lip tracker 123, and the characteristic dot detector 124 constitute the lip shape detector 120. The voice section detector 112, the phoneme separator 113, the voice recognition engine 114, the lip detector 122, the lip tracker 123, the characteristic dot detector 124, and the voice recognition result verifier 130 may be embodied via one or more processors or general purpose computer.

The microphone 111 receives a voice input made by the user. The microphone 111 generates an analog voice signal corresponding to the voice of the user, and converts the analog voice signal into a digital voice signal through an analog-to-digital converter (ADC). Here, the microphone 111 may be realized as an additional microphone outside the voice recognition apparatus 100, but this is only an exemplary embodiment. Therefore, the microphone 111 may be realized inside the voice recognition apparatus 100.

The voice section detector 112 determines a start and an end of the voice made by the user by using the digital voice signal to detect the voice section. In more detail, the voice section detector 112 calculates energy of the input voice signal, classifies an energy level of the voice signal according to the calculated energy, and detects the voice section through dynamic programming. Here, if the voice section detector 112 detects a start of a voice recognition when the user makes the voice, the voice section detector 112 outputs a voice recognition start signal to the lip detector 122 in order to obtain the lip image of the user.

The phoneme separator 113 detects phonemes, which are minimum units of a voice, from the voice signal of the voice section based on an acoustic model to generate phoneme data. Here, in the case of a language in which writing signs are different from phonetic signs, like the English language, phoneme data may be generated by using phonetic signs.

The phoneme separator 113 outputs the phoneme data to the voice recognition engine 114 to recognize the voice and outputs the phoneme data to the voice recognition result verifier 130 to verify a voice recognition result.

The voice recognition engine 114 converts the voice signal of the voice section into the text information. In more detail, the voice recognition engine 114 converts the voice signal of the voice section into the text information by using the HMM probability model. Here, the HMM probability mode refers to a method of modeling phonemes which are basic units for a voice recognition, i.e., a method of making words and sentences by using the phoneme data input into the voice recognition engine 114 and phoneme data stored in a database of the voice recognition engine 114.

The camera 121 is an apparatus which captures the face of the user to detect the lip image of the user and is installed in the voice recognition apparatus 100. However, this is only an exemplary embodiment, and thus a camera installed outside the voice recognition apparatus 100 may be used to capture the face of the user and transmit captured image data to the voice recognition apparatus 100.

If the voice recognition start signal is received from the voice section detector 112, the lip detector 122 detects the face of the user from the image data captured by the camera 121 and detects the lip image from the face of the user. Here, the lip detector 122 separates motion images (motions of eyes, the mouth, the jaw, etc.) of elements of the face from the received image data, compares the received image data with a preset lip image, and calculates a template match rate to analyze whether the received image data includes the lip image, in order to detect the lip image.

The lip tracker 123 tracks a motion of the lip image, which is detected by the lip detector 122, in the voice section. In other words, the lip tracker 123 tracks and stores the lip image of the user when the user makes the voice.

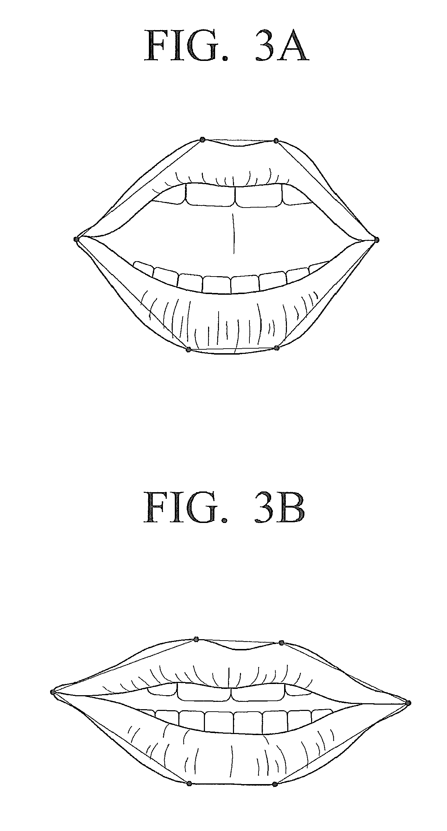

The characteristic dot detector 124 detects the characteristic dots according to the tracked lip image. Here, the characteristic dots may use a plurality of dots, which are positioned around the mouth and affect a lip shape of the lip image, to determine motions of lips by using only a part of the lip image rather than to determine motions of the whole lip image. For example, as shown in FIGS. 3A through 3C, the characteristic dots may include two dots of both sides of the lips, two dots of the upper lip, and two dots of the lower lip.

The characteristic dot detector 124 outputs the characteristic dots of the lip image to the voice recognition result verifier 130.

The voice recognition result verifier 130 compares the phoneme data output from the phoneme separator 113 with the characteristic dots of the lip image output from the characteristic dot detector 124 to determine whether the voice recognition result is correct. In detail, the voice recognition result verifier 130 sequentially compares phoneme data of the phoneme data, which is output from the phoneme separator 113 and affects the lip shape, with the characteristic dots of the lip image to determine whether the voice recognition result is correct.

In more detail, in the case of Korean, a lip shape is determined according to vowels. In detail, in Korean, lip shapes shown in FIGS. 3A through 3C are determined according to kinds of vowels. Matching between detailed vowels and lip shapes are shown in Table 1 below.

**[Table 1]**

| Vowel | Lip Image |
|---|---|
| ■, ■, ■, ■ | FIG. 3A |
| ■, ■ | FIG. 3B |
| ■, ■, ■, ■ | FIG. 3C |

Therefore, if the voice recognition apparatus 100 is operated in a Korean mode, the voice recognition result verifier 130 sequentially compares vowel data of the phoneme data with the characteristic dots of the lip image output from the lip shape detector 120.

For example, if the voice made by the user is 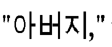 the phoneme separator 123 separates phoneme data 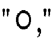 " ├," 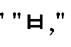 " ┤," 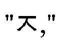 and " | " by using the input voice signal. The phoneme separator 123 also outputs the phoneme data 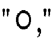 "├, 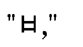 "┤," 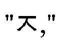 and "| " to the voice recognition result verifier 130. The voice recognition result verifier 130 detects vowel data "├ ," " ┤," and " | " of the input phoneme data which affects the lip shape. The voice recognition result verifier 130 receives lip images from the lip image detector 120 in orders of FIG. 3A -> FIG. 3A -> FIG. 3B. Therefore, since the vowel data of the phoneme data matches with the orders of the lip images output from the lip image detector 120, the voice recognition result verifier 130 determines whether the voice recognition result is correct. As a result, the voice recognition result verifier 130 may output text information indicating that the voice made by the user is 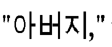 to the display unit 200.

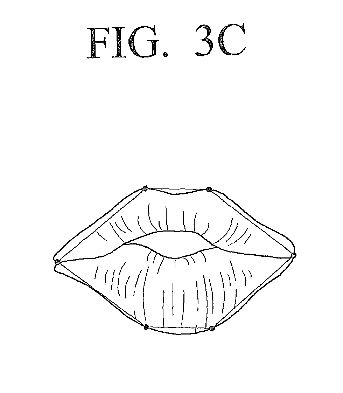

However, if the voice made by the user is 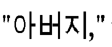 but the voice recognizer 110 wrongly recognizes the voice as 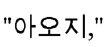 the phoneme separator 123 separates phoneme data 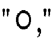 "├," 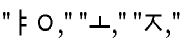 and " | " according to the recognized voice signal and outputs the phoneme data 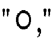 "├," 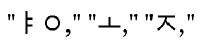 and " | " to the voice recognition result verifier 130. The voice recognition result verifier 130 detects vowel data "├," 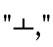 and " | " of the input phoneme data which affects the lip shapes. Also, the voice recognition result verifier 130 receives the lip images from the lip shape detector 120 in orders of FIG. 3A -> FIG. 3A -> FIG. 3B. The lip images are to be input in orders of FIG. 3A -> FIG. 3C -> FIG. 3B so that the voice recognition result is correct according to the phoneme data. However, the lip images are input in orders of FIG. 3A -> FIG. 3A -> FIG. 3B, and thus the voice recognition result verifier 130 determines that the vowel data of the phoneme data does not correspond to the orders of the lip images output from the lip shape detector 120. Therefore, the voice recognition result verifier 130 determines that the voice recognition result is incorrect. Also, the voice recognition result verifier 130 outputs a menu, which includes information indicating that the voice made by the user has been wrongly recognized and information for requesting a voice re-recognition, to the display unit 200.

The above-described exemplary embodiment has mentioned Korean, but this is only an exemplary embodiment. However, the present invention may be applied to other languages.

For example, in the case of the English language, the voice recognition result verifier 130 analyzes recognized phonemes and lip shape patterns of the recognized phonemes so as to determine whether text information output as a voice recognition result is correct. In particular, while each phoneme is being vocalized, a lip shape changes continuously so that the voice recognition result verifier 130 can compare between phonemes output as a recognition result and lip shapes according to a sequence. In this case, it is possible to learn lip shape patterns of each of phonemes in advance, pre-store the lip shape patterns, and compare between patterns of a phoneme sequence output as a recognition result (ex. tri-phone sequence) and lip shape patterns of an actually vocalizing person using the pre-stored lip shape patterns so as to determine whether text information output as a voice recognition result is correct.

For example, "nice" is configured by a phoneme sequence of {sil-sil-n}, {sil-n-a}, {n-a-i}, {a-i-s}, {i-s-sil} and {s-sil-sil}. In addition, if a user says the word "nice", the voice recognition result verifier 130 can compare between lip shape patterns of a pre-stored phoneme sequence and lip shape patterns of the user, who actually vocalizes, so as to determine a recognition result.

As described above, the voice recognition apparatus 100 determines whether text information is correct according to a voice recognition result, by using lip images, thereby enabling a further accurate voice recognition.

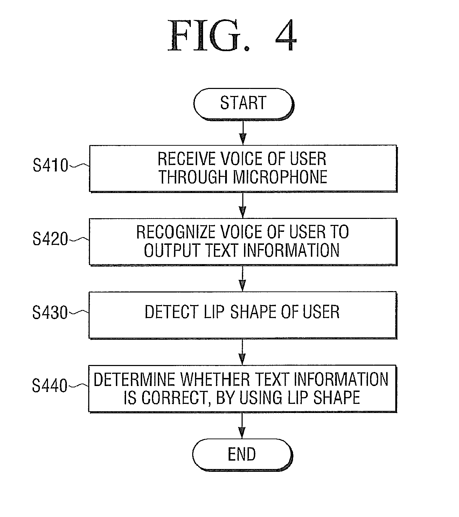

FIG. 4 is a flowchart illustrating a voice recognition method of the voice recognition apparatus 100 according to an exemplary embodiment.

In operation S410, the voice recognition apparatus 100 receives a voice of a user through a microphone. Here, the microphone may be installed inside the voice recognition apparatus 100, but this is only an exemplary embodiment. Therefore, the microphone may be installed outside the voice recognition apparatus 100. Also, the voice recognition apparatus 100 converts an analog voice signal of the voice received through the microphone into a digital voice signal.

In operation S420, the voice recognition apparatus 100 recognizes the voice of the user to output text information. In detail, the voice recognition apparatus 100 determines a start and an end of the voice made by the user, by using the voice signal received through the microphone to detect a voice section. The voice recognition apparatus 100 detects phonemes, which are minimum units of a voice, from the voice signal of the voice section based an acoustic model to generate phoneme data and converts voice data into text information by using the phoneme data. Here, the voice recognition apparatus 110 may convert the voice signal of the voice section into the text information by using the HMM probability model.

In operation S430, the voice recognition apparatus 100 detects a lip shape of the user. In detail, the voice recognition apparatus 100 captures a face of the user by using a camera. If the voice recognition apparatus 100 detects a voice section to determine that a voice recognition operation has started, the voice recognition apparatus 100 detects a lip image of the user from the face of the user, tracks the detected lip image, and detects characteristic dots of the lip image which has been tracked according to a lip shape.

In operation S440, the voice recognition apparatus 100 determines whether text information is correct according to a voice recognition result, by using the lip shape. In detail, the voice recognition apparatus 100 compares the lip image with the phoneme data detected when converting the voice signal into the text information, to determine whether the text information is correct according to the voice recognition result. Here, the voice recognition apparatus 100 sequentially compares vowel data of the phoneme data, which affects motions of lips, with the lip image to determine whether the text information is correct according to the voice recognition result.

If the phoneme data corresponds to the lip image, the voice recognition apparatus 100 determines that the voice recognition result is correct and outputs the text information to through a device such as a display unit 200. If the phoneme data does not correspond to the lip image, the voice recognition apparatus 100 outputs a message, which is to display an incorrect voice recognition and request a voice re-recognition, to the outside.

According to the voice recognition method as described above, a further accurate voice recognition may be provided to a user.

In the above-described exemplary embodiment, the voice recognition engine 124 converts a voice signal into text information by using the HMM probability model, but this is only an exemplary embodiment. Therefore, the voice recognition engine 124 may convert the voice signal into the text information by using another voice recognition method.

Also, in the above-described exemplary embodiment, phoneme data affects lip images. However, another type of phoneme data which may affect lip images may also be applied to the present invention. For example, phoneme data such as 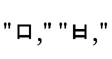 and 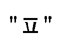 may also be phoneme data which may affect lip images.

The foregoing exemplary embodiments and advantages are merely exemplary and are not to be construed as limiting the present invention. The exemplary embodiments can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A voice recognizing apparatus comprising:
a voice recognizer which recognizes a voice made by a user and outputs text information based on the recognized voice;
a lip shape detector which detects a lip shape of the user; and
a voice recognition result verifier which determines whether the text information output by the voice recognizer is correct, by using a detection result by the lip shape detector.

2. The voice recognizing apparatus as claimed in claim 1, wherein the voice recognizer comprises:
a microphone which receives the voice of the user and outputs a voice signal;
a voice section detector which detects a voice section, corresponding to the voice of the user, from the voice signal output by the microphone;
a phoneme separator which detects phonemes from the voice section to generate phoneme data and outputs the phoneme data; and
a voice recognition engine which converts the voice signal into the text information by using the phoneme data of the voice section.

3. The voice recognizing apparatus as claimed in claim 2, wherein the lip shape detector comprises:
a lip detector which detects a lip image of the user;
a lip tracker which tracks variations of the lip image of the user; and
a characteristic dot detector which detects characteristic dots according to the variations of the lip image.

4. The voice recognizing apparatus as claimed in claim 3, wherein the voice recognition result verifier compares the phoneme data output by the phoneme separator with the characteristic dots to determine whether the text information output from the voice recognizer is correct.

5. The voice recognizing apparatus as claimed in claim 4, wherein the voice recognition result verifier extracts phoneme data affecting the lip shape from the phoneme data separated by the phoneme separator to check whether the phoneme data affecting the lip shape sequentially exists in the lip images.

6. The voice recognizing apparatus as claimed in any one of claims 2 through 5, wherein the phoneme separator generates the phoneme data by using phonetic signs of the text information.

7. The voice recognizing apparatus as claimed in any one of claims 2 through 5, wherein the voice recognition engine converts the voice made by the user into the text information by using a Hidden Markov Model (HMM) probability model.

8. The voice recognizing apparatus as claimed in any one of claims 1 through 7, further comprising a display unit which displays a result of the determination of whether the text information is correct by the voice recognition result verifier.

9. A voice recognizing method comprising:
recognizing a voice of a user and outputting text information based on the recognized voice;
detecting a lip shape of a user; and
determining whether the text information is correct based on a result of the detecting the lip shape of the user.

10. The voice recognizing method as claimed in claim 9, wherein the recognizing the voice of the user and outputting the text information comprises:
receiving the voice through a microphone and outputting a voice signal by the microphone;
detecting a voice section, corresponding to the voice of the user, from the voice signal output by the microphone;
separating phonemes of the voice section to generate phoneme data and outputting the phoneme data; and
converting the phoneme data of the voice section into the text information and outputting the text information.

11. The voice recognizing method as claimed in claim 10, wherein the detection of the voice section comprises:
detecting a lip image of the user;
tracking variations of the lip image of the user; and
detecting characteristic dots according to the variations of the lip image.

12. The voice recognizing method as claimed in claim 11, wherein the separated phoneme data is compared with the characteristic dots to determine whether the text information is correct.

13. The voice recognizing method as claimed in claim 12, wherein the determination of whether the text information is correct comprises:
extracting phoneme data affecting the lip shape from the generated phoneme data; and
checking whether the phoneme data affecting the lip shape sequentially exists in the detected lip image, to determine whether the text information is correct.

14. The voice recognizing method as claimed in any one of claims 10 through 13, wherein the phoneme data is generated and output by using phonetic signs of the text information, and the voice made by the user is converted into the text information by using an HMM probability model.

15. The voice recognizing method as claimed in any one of claims 9 through 14, further comprising displaying a result of the determining whether the text information is correct.
